# EUROPEAN PATENT APPLICATION

(11) **EP 4 498 233 A1**
(43) Date of publication of application: **29.01.2025**
(21) Application number: 23187804.2
(22) Date of filing: 26.07.2023
(51) Int. Cl.: G06F 8/65, G05B 19/05, G06F 8/34

(54) **SYSTEM AND METHOD FOR UPGRADING A DISTRIBUTED CONTROL SYSTEM**

(71) Applicant: Siemens Ltd., Worli, Mumbai (IN)
(72) Inventor: MANJREKAR, Baban, 401209 Mumbai (IN); NILE, Sachin, 400095 Mumbai (IN); NIMKAR, Siddesh, 400601 Thane (IN); SARASWAT, Akshita, 400076 Mumbai, Maharastra (IN)
(74) Representative: Patentanwaltskanzlei WILHELM & BECK

(57) **Abstract**

A method of upgrading a distributed control system (104) from a first version to a second version is disclosed. The method includes identifying (702) at least one functional block associated with the distributed control system (104) and creating (704) at least one intermediate container block corresponding to each of the identified at least one functional block. Further, the method includes importing (706) one or more connections associated with the at least one functional block to the at least one intermediate container block and automatically updating (708) a configuration of each of the one or more second functional block pins of the at least one intermediate container block. Further, the method includes upgrading (710) the first version to the second version of the distributed control system (104) by importing the at least one functional block associated with the second version into the at least one intermediate container block.

## Description

### FIELD OF THE INVENTION

The present invention generally relates to distributed control systems, and more particularly relates to a system and a method for upgrading a distributed control system from a first version to a second version.

### BACKGROUND

Distributed Control System (DCS) is a control system for a process plant which includes a set of components, such as sensors, controllers, associated computers, and the like, distributed throughout the system. Further, the set of components is configured to perform one or more functions including data acquisition and storage, graphical display, process control, and the like. The DCS is used in the process plant for enhancing reliability and reducing costs associated with installation of the set of components by localizing control functions near the process plant. Furthermore, the DCS is required to be updated periodically from an old version to a latest version for multiple reasons, such as enhancing production efficiency, ensuring quality of the set of components, and improving employee safety.

Further, the latest version of the DCS may include latest functional block pins with different names as compared to old functional block pins associated with the old version of the DCS. Currently, a user is required to manually compare and map the old functional block pins with the latest functional block pins for performing the upgradation of the DCS. Further, the user uses a mapping table to view a mapping between the old functional block pins and the latest functional block pins. Accordingly, the user manually maps the old functional block pins with the latest functional block pins based on the mapping provided in the mapping table. However, in such conventional manual upgradation methodology, each functional block associated with the DCS is required to be replaced manually by the users. Furthermore, the users are required to manually reconnect functional block pins associated with the functional block. Thus, the manual upgradation of the DCS requires substantial efforts and time, which may increase chances of errors during the upgrade.

Further, the user user is not allowed to rename the old functional block pins because the old functional block pins are locked and password protected. Thus, the user is restricted to access and update the names of the old functional block pins.

In another conventional technique, the DCS is updated to the latest version by using an additional software. The software applies a set of rules on the DCS to update the DCS to the latest version. Accordingly, this conventional mechanism of updating the DCS requires an additional software. The users may be required to purchase a license of such software resulting in high cost of upgradation. Furthermore, the software is in the final stage of its product life cycle. Thus, the users may not be able to use the software for updating the DCS system.

Accordingly, there is a need for a system and method to overcome the above-identified issues.

### SUMMARY

This summary is provided to introduce a selection of concepts, in a simplified format, that are further described in the detailed description of the invention. This summary is neither intended to identify key or essential inventive concepts of the invention and nor is it intended for determining the scope of the invention.

According to one embodiment of the present disclosure, a method of upgrading a distributed control system from a first version to a second version is disclosed. The method includes identifying at least one functional block, from among a plurality of functional blocks, associated with the distributed control system during upgradation of the distributed control system from the first version to the second version based on a type of the plurality of functional blocks. The at least one functional block includes one or more Cement Automation (CEMAT) block. In an exemplary embodiment of the present disclosure, the type of the plurality of functional blocks corresponds to functional blocks for drives, valves, dampers, a block to monitor digital and analog signals. The identified at least one functional block comprises one or more first functional block pins and one or more code segments. The at least one functional block associated with the distributed control system is a password protected block. A user is restricted to update the at least one functional block. Since the at least one functional block is the password protected block, the privacy of the at least one functional block along with the one or more code segment in the at least one functional block is protected while upgrading the distributed control system to the second version. Further, the method includes creating at least one intermediate container block corresponding to each of the identified at least one functional block. The at least one intermediate container block comprises one or more second functional block pins. Furthermore, the method includes importing one or more connections associated with the at least one functional block to the at least one intermediate container block. The method also includes automatically updating a configuration of each of the one or more second functional block pins of the at least one intermediate container block with a configuration of one or more new functional block pins associated with the at least one functional block in the second version by using a configuration library upon importing the one or more connections. The one or more second functional block pins of the at least one intermediate container block comprises the one or more connections and the one or more code segments. Further, the method includes upgrading the first version to the second version of the distributed control system by importing the at least one functional block associated with the second version into the at least one intermediate container block upon automatically updating the configuration of each of the one or more second functional block pins. Since, the method automatically upgrades the first version to the second version of the distributed control system, the time and efforts of the user required to upgrade a version of the distributed control system are substantially reduced. Further, the method reduces human intervention for upgrading the version of the distributed control system resulting in lesser chances of any errors.

Further, in automatically updating the configuration of each of the one or more second functional block pins of the at least one intermediate container block, the method includes receiving one or more inputs from the user to update the configuration of each of the one or more second functional block pins of the at least one intermediate container block. Furthermore, the method includes generating the configuration library based on the received one or more inputs, wherein the configuration library includes a mapping of configurations of the one or more second functional block pins with configurations of the one or more new functional block pins. The method also includes automatically updating the configuration of each of the one or more second functional block pins of the at least one intermediate container block with the configuration of the one or more new functional block pins associated with the at least one functional block in the second version by using the generated configuration library. The method includes automatically generating the configuration library based on the one or more inputs from the user, such that the distributed control system can be automatically upgraded based on the generated configuration library without any manual intervention from the user.

Further, the one or more connections and the one or more code segments associated with the at least one functional block remains same upon automatically upgrading the first version to the second version of the distributed control system.

Furthermore, the method includes updating the configuration of each of the one or more second functional block pins of the at least one intermediate container block with the configuration of the one or more new functional block pins associated with the at least one functional block in the second version based on the received one or more inputs.

Further, the method includes importing the at least one intermediate container block into a program associated with the distributed control system upon automatically updating the configuration of each of the one or more second functional block pins. The program includes the one or more controllers associated with the distributed control system. Each of the one or more controllers includes one or more sources, the at least one functional block, one or more charts, and one or more symbols.

According to another embodiment of the present disclosure, a system for upgrading a distributed control system from a first version to a second version is disclosed. The system includes a memory and one or more processors communicatively coupled to the memory. The memory comprises a plurality of modules in the form of programmable instructions executable by the one or more processors. Further, the plurality of modules comprises an identifying module configured to identify at least one functional block, from among a plurality of functional blocks, associated with the distributed control system during upgradation of the distributed control system from the first version to the second version based on a type of the plurality of blocks. The at least one functional block includes one or more CEMAT block. The identified at least one functional block comprises one or more first functional block pins and one or more code segments. The plurality of modules further comprises a creating module configured to create at least one intermediate container block corresponding to each of the identified at least one functional block. The at least one intermediate container block comprises one or more second functional block pins. The plurality of modules also include an importing module configured to import one or more connections associated with the at least one functional block to the at least one intermediate container block. Furthermore, the plurality of modules include an updating module configured to automatically update a configuration of each of the one or more second functional block pins of the at least one intermediate container block with a configuration of one or more new functional block pins associated with the at least one functional block in the second version by using a configuration library upon importing the one or more connections. The one or more second functional block pins of the at least one intermediate container block comprises the one or more connections and the one or more code segments. The plurality of module further comprises an upgrading module configured to upgrade the first version to the second version of the distributed control system by importing the at least one functional block associated with the second version into the at least one intermediate container block upon automatically updating the configuration of each of the one or more second functional block pins.

Further, in automatically updating the configuration of each of the one or more second functional block pins of the at least one intermediate container block, the updating module is configured to receive one or more inputs from the user to update the configuration of each of the one or more second functional block pins of the at least one intermediate container block. Furthermore, the updating module is configured to generate the configuration library based on the received one or more inputs, wherein the configuration library includes a mapping of configurations of the one or more second functional block pins with configurations of the one or more new functional block pins. The updating module is configured to automatically update the configuration of each of the one or more second functional block pins of the at least one intermediate container block with the configuration of the one or more new functional block pins associated with the at least one functional block in the second version by using the generated configuration library. The updating module is configured to automatically generates the configuration library based on the one or more inputs from the user, such that the distributed control system can be automatically upgraded based on the generated configuration library without any manual intervention from the user.

Furthermore, the updating module is configured to update the configuration of each of the one or more second functional block pins of the at least one intermediate container block with the configuration of the one or more new functional block pins associated with the at least one functional block in the second version based on the received one or more inputs.

According to another embodiment of the present disclosure, an industrial environment is disclosed. The industrial environment includes a system, as discussed throughout the present disclosure, and a technical installation comprising one or more physical components. Further, the industrial environment includes a plurality of human machine interfaces communicatively coupled to the system via a network. The system is configured to perform one or more methods, as discussed throughout the present disclosure.

According to another embodiment of the present disclosure, computer-program product is disclosed. The computer-program product has machine-readable instructions stored therein, that when executed by one or more processors, cause the one or more processors to perform one or more methods, as discussed throughout the present disclosure.

To further clarify the advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
**Figure 1** illustrates a block diagram of an industrial environment comprising a system for upgrading a distributed control system from a first version to a second version, according to an embodiment of the present disclosure;
**Figure 2** illustrates a block diagram of the system for upgrading the distributed control system from the first version to the second version, according to an embodiment of the present disclosure;
**Figure 3** illustrates a block diagram of a plurality of modules of the system for upgrading the distributed control system from the first version to the second version, according to an embodiment of the present disclosure;
Figures 4A - B illustrate a pictorial depiction of at least one functional block, according to an embodiment of the present disclosure;
Figures 4C - D illustrate a pictorial depiction of one or more charts, according to an embodiment of the present disclosure;
**Figure 4E** illustrates a pictorial depiction of a program, according to an embodiment of the present disclosure;
**Figures 5A** - **5M** are graphical user interface screens depicting an operation of the system for upgrading the distributed control system from the first version to the second version, according to an embodiment of the present disclosure;
**Figures 6A** - **6B** illustrate a process flow diagram depicting an operation of the system for upgrading the distributed control system from the first version to the second version, according to an embodiment of the present disclosure; and
**Figure 7** illustrates an exemplary process flow depicting a method for upgrading the distributed control system from the first version to the second version, according to an embodiment of the present disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

### DETAILED DESCRIPTION

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

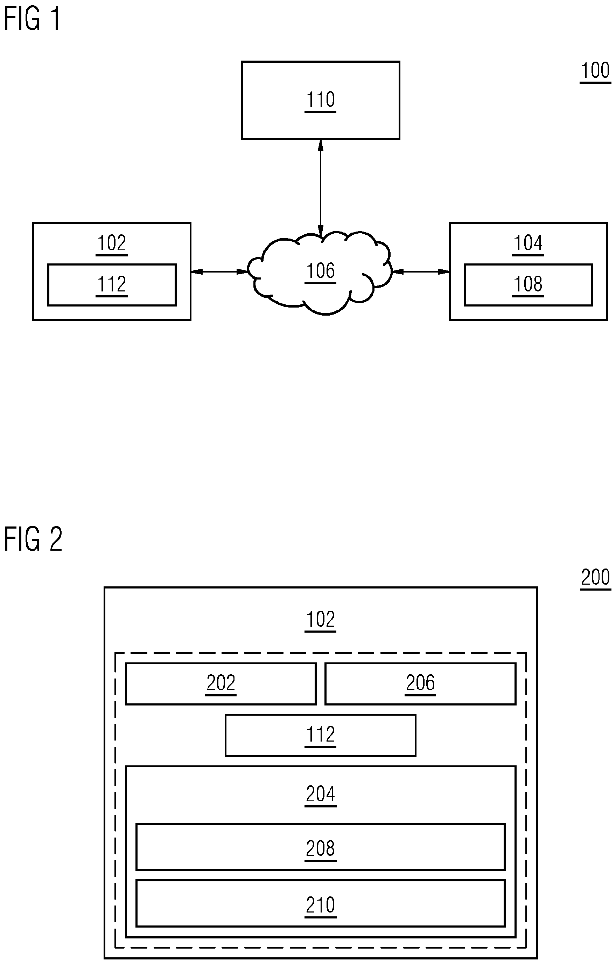

**Figure 1** illustrates a block diagram of an industrial environment 100 comprising a system 102 for upgrading a distributed control system 104 from a first version to a second version, according to an embodiment of the present disclosure. As depicted, the industrial environment 100 includes the system 102 communicatively coupled to the distributed control system 104 via a network 106. The industrial environment 100 includes a technical installation comprising one or more physical components 108, such as one or more controllers, one or more Inputs/Outputs (I/Os), and one or more field devices. In an embodiment, the one or more physical components 108 are part of the distributed control system 104 associated with a process plant, such as cement plant. For example, the one or more field devices include, but are not limited to, one or more sensors, one or more cameras, and one or more valves. In an embodiment of the present disclosure, the one or more physical components 108 are configured to perform one or more functions including, but not limited to, data acquisition and storage, graphical display, and process control.

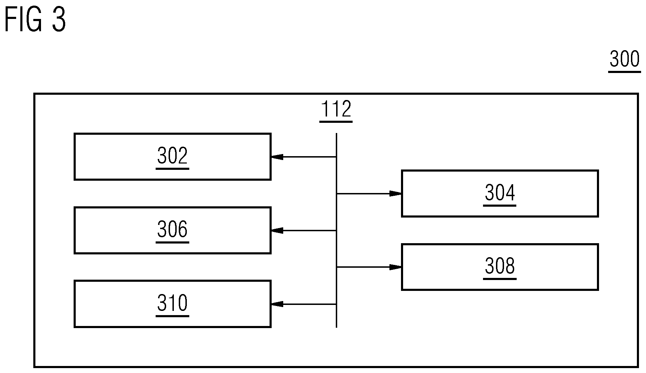

Further, the industrial environment 100 includes a plurality of human machine interfaces 110 communicatively coupled to the system 102 via the network 106. In an embodiment, the plurality of human machine interfaces 110 enable a user to transmit and receive data from the system 102. For example, the user provides one or more inputs to the system 102 via the plurality of human machine interfaces 110 to generate a configuration library. Details on the configuration library have been elaborated in subsequent paragraphs with reference to **FIG. 3****.**

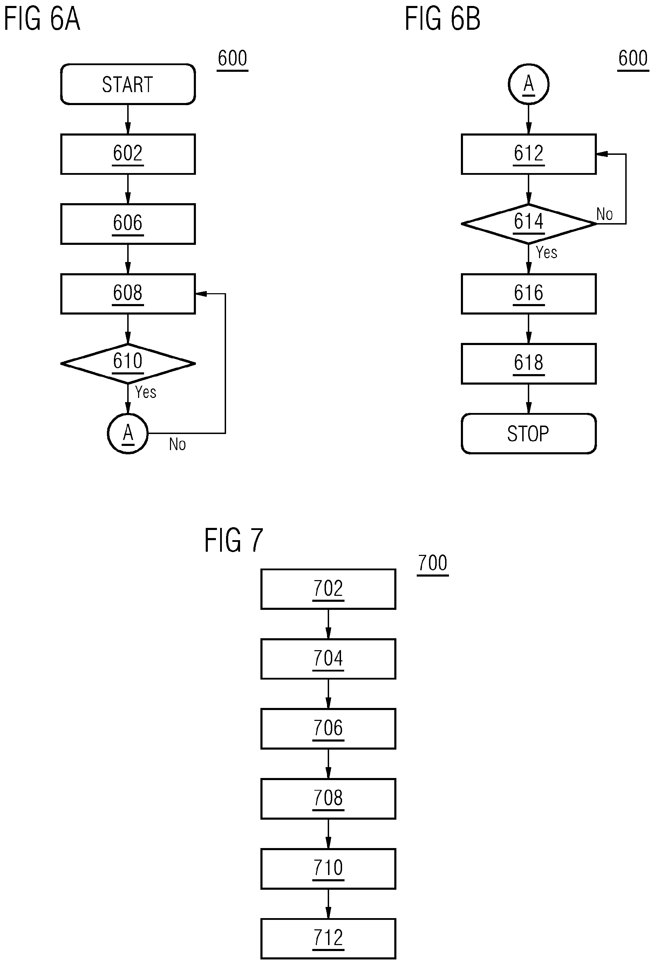

In an embodiment, the system 102 and the plurality of human machine interfaces 110 are hosted on one or more electronic devices. In an exemplary embodiment, the one or more electronic devices includes a laptop computer, a desktop computer, a smartphone, a wearable device, and the like. Further, the network 106 includes a wireless network or a wired network. For example, the network 106 corresponds to cellular networks or mobile networks, such as 3G, 4G, 5G, pre-5G, 6G network, or any other wireless communication network. Furthermore, the system 102 includes a plurality of modules 112 to perform one or more methods, as discussed throughout the present disclosure. The details on plurality of modules 112 have been elaborated in subsequent paragraphs at least with reference to **FIG. 3****.** Further, the details on the method(s) performed by the system 102 have been elaborated in subsequent paragraphs at least with reference to **FIG. 7****.**

Furthermore, the system 102 is configured to upgrade the distributed control system 104 from a first version to a second version. In an embodiment of the present disclosure, the upgradation of the distributed control system 104 correspond to software updagradation. In an exemplary embodiment of the present disclosure, the distributed control system is updated from version 7 of Advanced Process Library (APL) or Cement Automation (CEMAT) to a latest version. The system 102 is configured to upgrade the distributed control system 104 by using at least one intermediate container block, as detailed hereinafter throughout the disclosure. The details on the system 102 have been elaborated in subsequent paragraphs at least with reference to **FIG. 2****.** Further, the details on at least one intermediate container block have been elaborated in subsequent paragraphs at least with reference to **FIG. 3****.**

**Figure 2** illustrates a block diagram of the system 102 for upgrading the distributed control system 104 from the first version to the second version, according to an embodiment of the present disclosure.

Further, the system 102 includes one or more processors 202, the plurality of modules 112, and a memory 204.

As a non-limiting example, the one or more processors 202 is a single processing unit or a number of units each including multiple computing units. The one or more processors 202 is implemented as one or more microprocessors, microcomputers, microcontrollers, digital signal processors, central processing units, state machines, logic circuitries, and/or any devices that manipulate signals based on operational instructions (computer-readable instructions) stored in the memory 204. Among other capabilities, the one or more processors 202 are configured to fetch and execute computer-readable instructions and data stored in the memory 204. The one or more processors 202 include one or a plurality of processors. The plurality of processors are further implemented as a general-purpose processor, such as a central processing unit (CPU), an application processor (AP), or the like, a graphics-only processing unit, such as a graphics processing unit (GPU), a visual processing unit (VPU), and/or an Al-dedicated processor such as a neural processing unit (NPU). The plurality of processors control the processing of the input data in accordance with a predefined operating rule or an artificial intelligence (Al) model stored in the memory 204. The predefined operating rule or the AI model is provided through training or learning.

The one or more processors 202 are disposed in communication with one or more input/output (I/O) devices via an Input/Output (I/O) interface 206. The I/O interface 206 employs communication code-division multiple access (CDMA), high-speed packet access (HSPA+), global system for mobile communications (GSM), long-term evolution (LTE), WiMax, or the like, etc. In another embodiment of the present disclosure, the I/O interface 206 employs Process Field Network (PROFINET)/industrial ethernet, industrial wireless Local Area Network (LAN), Process Field Bus (PROFIBUS), Actuator Sensor (AS) Interface, and the like. The PROFINET corresponds to a mechanism for exchanging data between controllers and devices. For example, the controllers include Programmable Logic Controllers (PLCs), Distributed Control Systems (DCSs), Programmable Automation Controllers (PACs), and the like. Further, the PROFIBUS is used to connect field devices, such as distributed I/O devices, valves or drives, to automation systems, such as SIMATIC S7, SIMOTION, SINUMERIK or Personal Computers (PCs). Further, the AS-Interface is an open international standard for fieldbus communication between ditributed actuators and sensors on the lowest control level.

In some embodiments, the memory 204 is communicatively coupled to the one or more processors 202. The memory 204 may be configured to store data, instructions executable by the one or more processors 202. In one embodiment, the memory 204 communicates via a bus within the system 102. The memory 204 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory includes a cache or random-access memory (RAM) for the one or more processors 202. In alternative examples, the memory 204 is separate from the one or more processors 202 such as a cache memory of a processor, the system memory, or other memory. The memory 204 is an external storage device or a database for storing data. The memory 204 is operable to store instructions executable by the one or more processors 202. The functions, acts or tasks illustrated in the figures or described are performed by the programmed processor for executing the instructions stored in the memory 204. The functions, acts or tasks are independent of the particular type of instructions set, storage media, processor or processing strategy and may be performed by software, hardware, integrated circuits, firmware, micro-code and the like, operating alone or in combination. Likewise, processing strategies include multiprocessing, multitasking, parallel processing, and the like.

In some embodiments, the plurality of modules 112 are included within the memory 204. The memory 204 further includes a database 208 to store data. The plurality of modules 112 include a set of instructions that may be executed to cause the system 102 to perform any one or more of the methods /processes disclosed herein. The plurality of modules 112 are configured to perform the steps of the present disclosure using the data stored in the database 208 to upgrade the distributed control system 104, as discussed herein. In an embodiment, each of the plurality of modules 112 may be a hardware unit which may be outside the memory 204. Further, the memory 204 includes an operating system 210 for performing one or more tasks of the system, as performed by a generic operating system 210 in the communications domain. In one embodiment, the database 208 is configured to store the information as required by the plurality of modules 112 and the one or more processors 202 to perform one or more functions for upgrading the distributed control system 104.

Further, the present invention also contemplates a computer-program product that includes instructions or receives and executes instructions responsive to a propagated signal. Further, the instructions may be transmitted or received over the network 106 via a communication port or interface or using a bus (not shown). The communication port or interface may be a part of the one or more processors 202 or may be a separate component. The communication port may be created in software or may be a physical connection in hardware. The communication port may be configured to connect with the network 106, an external media, the display, or any other components in the system 102. The connection with the network 106 may be a physical connection, such as a wired ethernet connection or may be established wirelessly. Likewise, the additional connections with other components of the system 102 may be physical or may be established wirelessly. The network 106 may alternatively be directly connected to the bus. For the sake of brevity, the architecture, and standard operations of the memory 204 and the one or more processors 202 are not discussed in detail.

In an embodiment, the computer-program product, having machine-readable instructions stored therein, that when executed by one or more processors 202, cause the one or more processors 202 to perform the method. The details on the method(s) performed by the one or more processors 202 have been elaborated in subsequent paragraphs at least with reference to **FIG. 7****.**

**Figure 3** illustrates a block diagram of the plurality of modules 112 of the system 102 for upgrading the distributed control system 104 from the first version to the second version, according to an embodiment of the present disclosure. The illustrated embodiment of Figure 3 also depicts a sequence flow of process among the plurality of modules 112 for upgrading the distributed control system 104. In an embodiment of the present disclosure, the plurality of modules 112 include, but not limited to, an identifying module 302, a creating module 304, an importing module 306, an updating module 308, and an upgrading module 310. The plurality of modules 112 are implemented by way of suitable hardware and/or software applications.

In an embodiment of the present disclosure, the identifying module 302 is configured to identify at least one functional block, from among a plurality of functional blocks, associated with the distributed control system 104 during upgradation of the distributed control system 104 from the first version to the second **version.** In an embodiment of the present disclosure, distributed control system-based project is considered as an input and the at least one functional block to be migrated is identified from among the plurality of functional blocks. Further, each of the plurality of functional blocks represent basic structural elements which are used in logic building of the distributed control system 104. In an embodiment of the present disclosure, the basic structural element correspond to a set of inputs and outputs designed for a particular functional block. The plurality of functional blocks corresponds to program blocks that permanently store their input, output, and in-out parameters in instance data blocks, such that the input, the output, and the in-out parameters may be accessed even after the plurality of functional blocks are processed. In an embodiment of the present disclosure, an instance is a the result of a functional block's call. Further, each of the plurality of functional block instance requires an instance data block, which includes instance-specific values for the functional block's formal parameters. Furthermore, the at least one functional block is identified based on a type of the plurality of functional blocks. In an exemplary embodiment of the present disclosure, the type of the plurality of functional blocks corresponds to functional blocks for drives, valves, dampers, a block to monitor digital and analog signals, and the like. Furthermore, the identified at least one functional block includes one or more first functional block pins and one or more code segments. In an embodiment of the present disclosure, the one or more first functional block pins correspond to a mechanism through which input or output in form of field signal or a logical signal is connected to a functional block. Further, the one or more code segments are physical or logical signals that are connected to the one or more first function block pins. Further, each of the at least one functional block includes a unique set of functionalities. In an embodiment of the present disclosure, each of the unique set of functionalities corresponds to a unique task which may be performed by a functional block for a set of components, such as sensors, controllers, associated computers, and the like, present in the field. In an embodiment of the present disclosure, the one or more code segments correspond to a predefined set of logic written in the at least one functional block by a developer of the at least one functional block based on the unique set of functionalities. The one or more code segments allows a front-end user to directly use the at least one functional block based on user requirements. In an embodiment of the present disclosure, the user requirements correspond to a representation of the set of components present in the field.

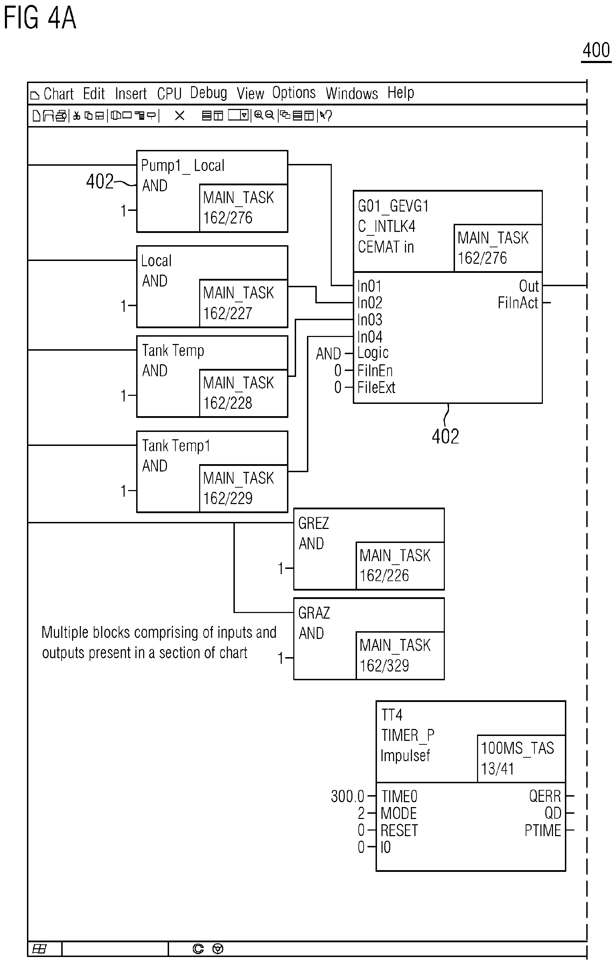

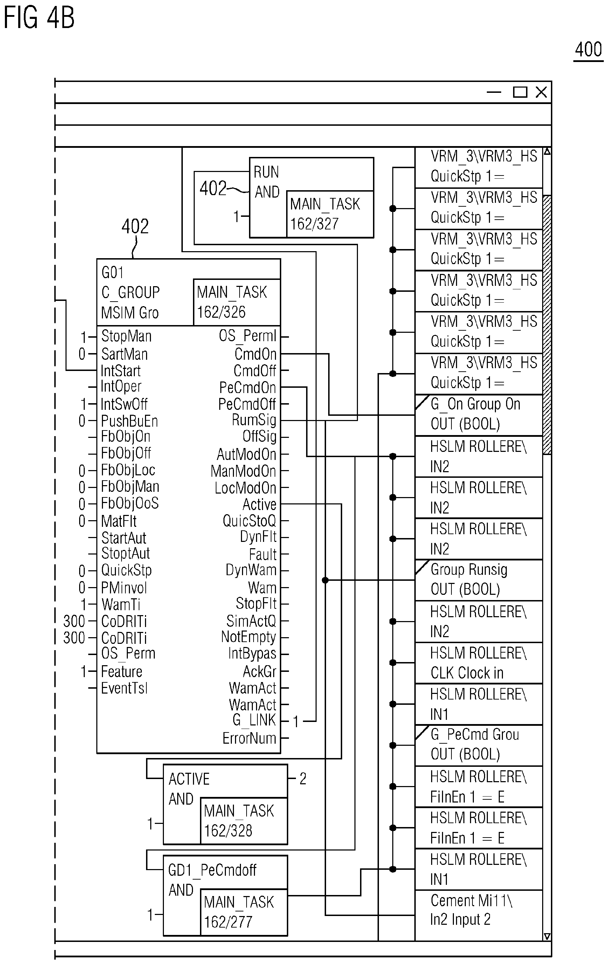

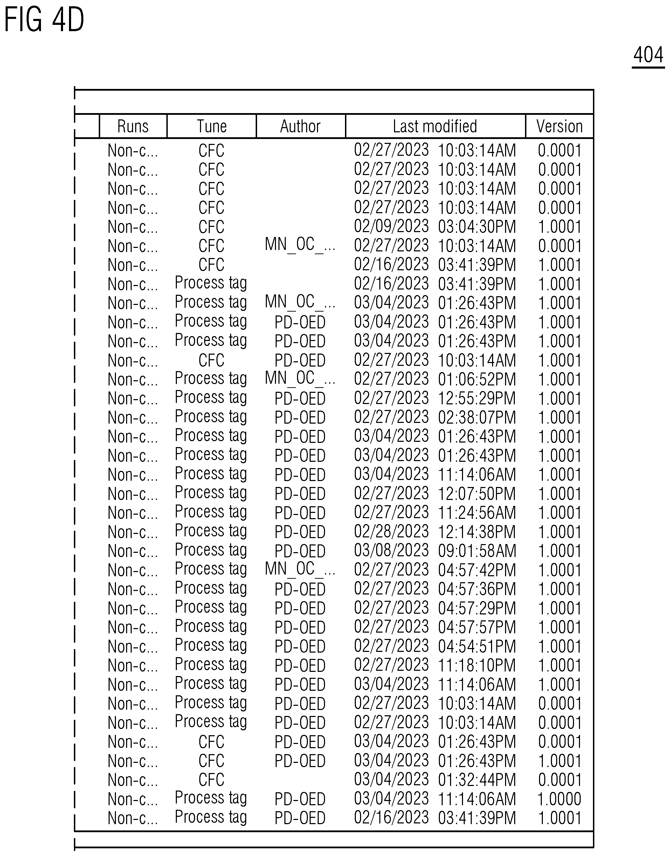

In an embodiment, the at least one functional block includes one or more CEMAT blocks. The one or more CEMAT blocks correspond to functional blocks developed with a code segment for matching a process requirement of the industrial environment 100 (e.g., a cement factory). In an embodiment of the present disclosure, the at least one functional block associated with the distributed control system 104 is a password protected block. Thus, a user is restricted to update the at least one functional block. Details on the at least one functional block have been elaborated in subsequent paragraphs at least with reference to FIGs. 4A - B.

Further, the creating module 304 is configured to create at least one intermediate container block corresponding to each of the identified at least one functional block. In an embodiment of the present disclosure, the at least one intermediate container block is created by cloning the identified at least one functional block, i.e., the one or more CEMAT blocks. In an exemplary embodiment of the present disclosure, the at least one intermediate container block are created for CEMAT blocks having pin names for the at least one functional block and one or more required code segments. For example, the one or more required code segments correspond to start of a motor when all the inputs as well as interlocks are fine. The at least one intermediate container block includes the one or more second functional block pins. In an embodiment of the present disclosure, in the at least one intermediate container block, a migration is performed by using a basic functionality of the distributed control system for upgradation of a project. The migration is performed by performing an import operation and an export operation. For example, the migration is carried out by using a default functionality of the distribured control system where the user is allowed to import and export the at least one functional block.

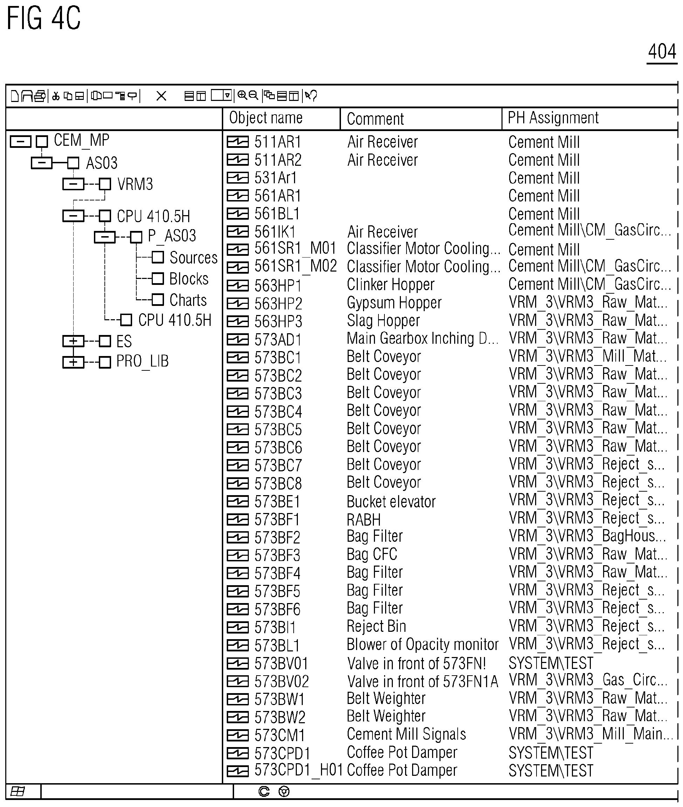

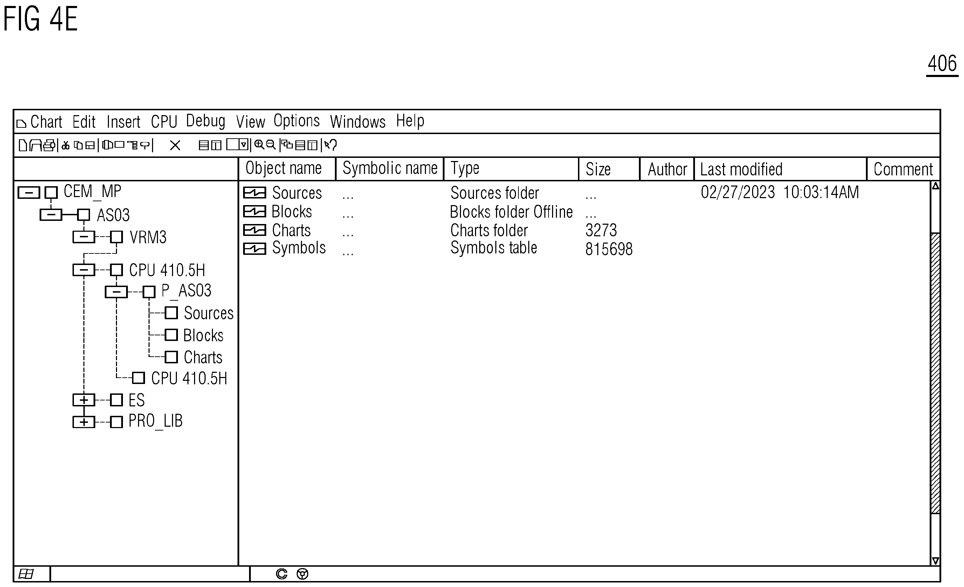

Furthermore, the importing module 306 is configured to import one or more connections associated with the at least one functional block to the at least one intermediate container block. In an embodiment of the present disclosure, the one or more connections are physical or logical signals that are connected to the one or more first functional block pins. In an embodiment of the present disclosure, the created at least one intermediate container block may be imported into a program. As a result, the one or more connections of one or more charts are moved to the at least one intermediate container block. In an embodiment of the present disclosure, the program includes the one or more controllers associated with the distributed control system 104. Further, each of the one or more controllers includes one or more sources, the at least one functional block, the one or more charts, and one or more symbols. In an embodiment of the present disclosure, the one or more sources correspond to a folder in which a source code may be added for the creation of a functional block. The functional block is not present in a standard library of the distributed control system 104. In an embodiment of the present disclosure, the one or more symbols are the representation of field signals which allow the user to recognize which signal is connected at which address. Each of the one or more charts is a combination of functional blocks representing a physical component along with its periphery signals and logic component that constitutes an intended use. In an embodiment of the present disclosure, the periphery signals are the signals associated with a component from the set of components. The peripheray signals help in understanding a health status of the component from the field. In an embodiment of the present disclosure, the logic component corresponds to a logic stored in the functional blocks. Further, each of the one or more charts includes a set of sub-charts which may denote a section of a process plant or an entire process plant. In an embodiment of the present disclosure, the at least one functional block present in the one or more charts includes one or more instances which are generated automatically in the program. Further, each of the one or more symbols corresponds to a table in which the user may define an input and an output address including field signals, signals denoting a health status of the one or more physical components 108, and the like. Details on the one or more charts have been elaborated in subsequent paragraphs at least with reference to **FIGs. 4C** - **4D****.** Details on the program have been elaborated in subsequent paragraphs at least with reference to **FIG. 4E****.**

The updating module 308 is configured to automatically update a configuration of each of the one or more second functional block pins of the at least one intermediate container block with a configuration of one or more new functional block pins associated with the at least one functional block in the second version upon importing the one or more connections. In an exemplary embodiment of the present disclosure, the configuration of each of the one or more second functional block pins corresponds to name of the one or more second functional block pins For example, when a configuration of new functional block pin is `ABC' and a configuration of a second functional block pin is `XYZ', the configuration of the second functional block pin is changed from `XYZ' to `ABC'. In an embodiment of the present disclosure, the configuration of each of the one or more second functional block pins is automatically updated by using the configuration library. The configuration library includes a mapping of configurations of the one or more second functional block pins with configurations of the one or more new functional block pins. In an exemplary embodiment of the present disclosure, the one or more second functional block pins of the at least one intermediate container block include the one or more connections and the one or more code segments.

For automatically updating the configuration of each of the one or more second functional block pins of the at least one intermediate container block, the updating module 308 is configured to receive one or more inputs from the user to update the configuration of each of the one or more second functional block pins of the at least one intermediate container block. For example, the one or more inputs correspond to names of the one or more new functional block pins for updating the configuration of each of the one or more second functional block pins with the received one or more inputs. Further, the updating module 308 is configured to generate the configuration library based on the received one or more inputs. In an embodiment of the present disclosure, the updating module 308 is configured to generate the configuration library by storing the mapping of the configurations of the one or more second functional block pins with the configurations of the one or more new functional block pins in the form of a look-up table. Furthermore, the updating module 308 is configured to automatically update the configuration of each of the one or more second functional block pins of the at least one intermediate container block with the configuration of the one or more new functional block pins associated with the at least one functional block in the second version by using the generated configuration library. In an embodiment of the present disclosure, the one or more connections associated with the at least one intermediate container block are maintained after updating the configuration of each of the one or more second functional block pins. The one or more connections are maintained because one or more functional attributes of the at least one intermediate container block may not be changed. In an embodiment of the present disclosure, the one or more functional attributes correspond to properties of the at least functional block, such as data types of inputs and outputs, a family and author of the at least functional block, and the like. In an embodiment of the present disclosure, the inputs and outputs are the connections from the at least one functional block which are present in the one or more charts.

In another embodiment of the present disclosure, the updating module 308 is configured to update the configuration of each of the one or more second functional block pins of the at least one intermediate container block with the configuration of the one or more new functional block pins associated with the at least one functional block in the second version based on the received one or more inputs. The updating module 308 updates the configuration of each of the one or more second functional block pins without generating the configuration library.

Further, the importing module 306 is configured to import the at least one intermediate container block into the program associated with the distributed control system 104 upon automatically updating the configuration of each of the one or more second functional block pins. In an embodiment of the present disclosure, the at least one intermediate container block represents a migrated library with the at least one functional block associated with the second version.

Furthermore, the upgrading module 310 is configured to upgrade the first version to the second version of the distributed control system 104 upon automatically updating the configuration of each of the one or more second functional block pins and importing the at least one intermediate container block into the program. In an embodiment of the present disclosure, the upgrading module 310 performs the upgradation by importing the at least one functional block associated with the second version into the at least one intermediate container block. For example, the at least one intermediate container block are updated with a latest version of the one or more CEMAT blocks. In an embodiment of the present disclosure, the one or more connections of the at least one intermediate container block are maintained since the configuration of each of the one or more second functional block pins of the at least one intermediate container block may be similar to the configuration of the one or more new functional block pins associated with the at least one functional block in the second version.

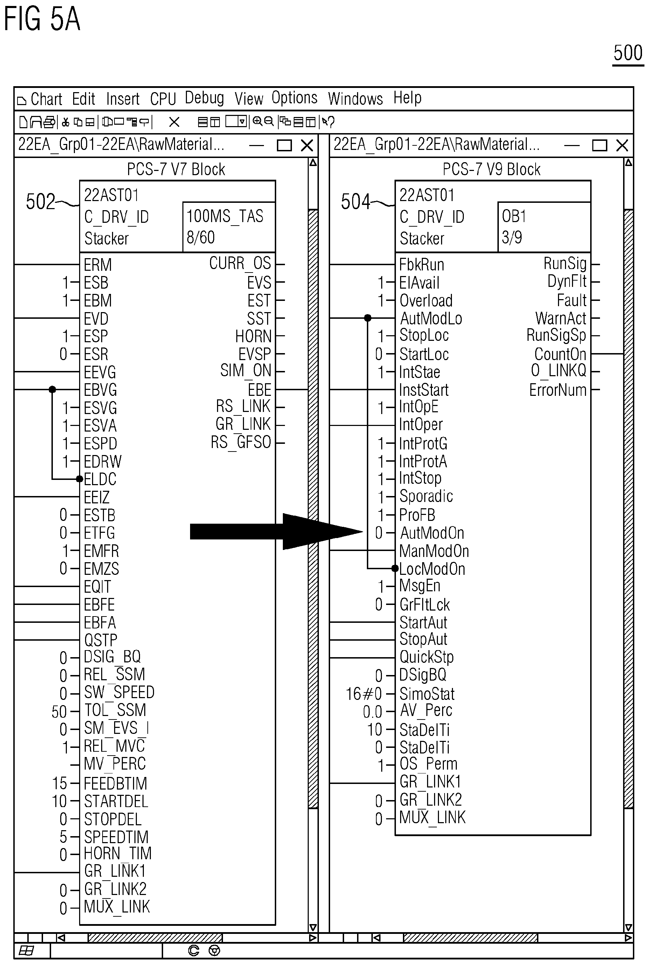

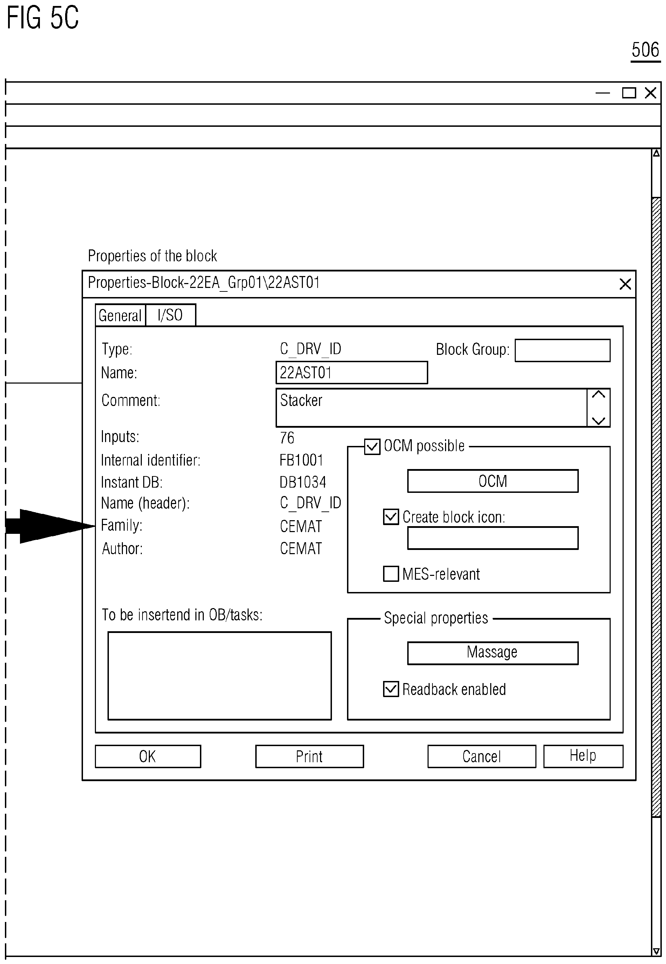

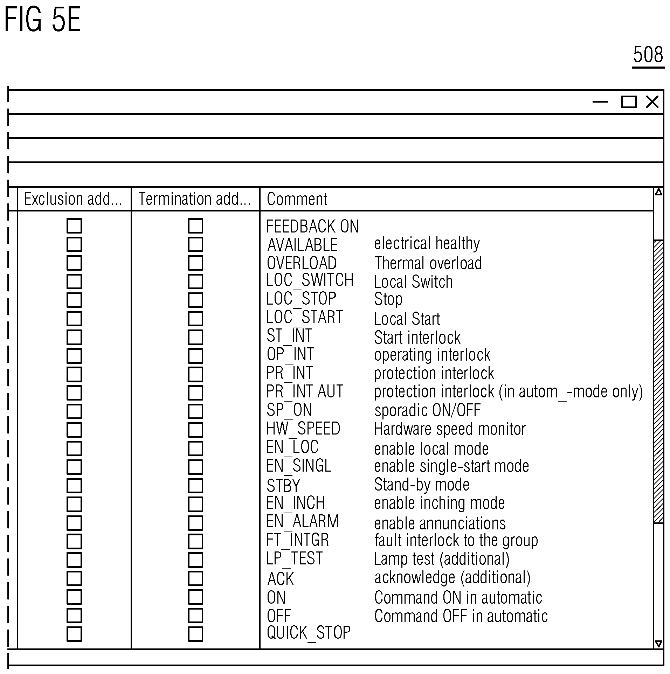

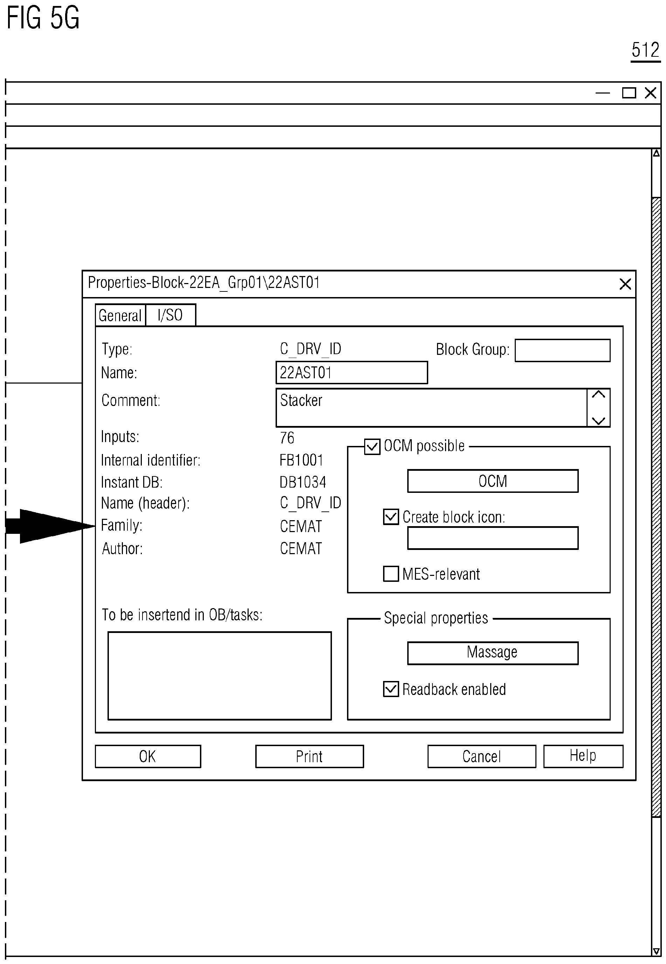

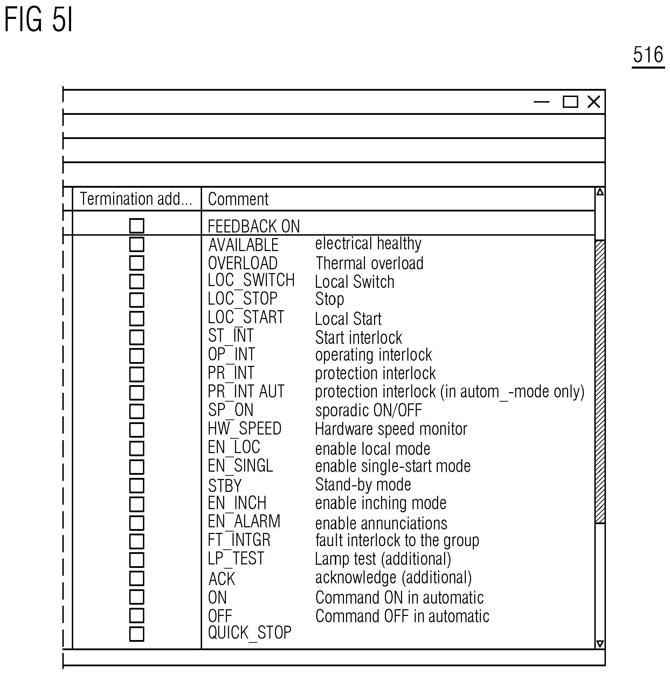

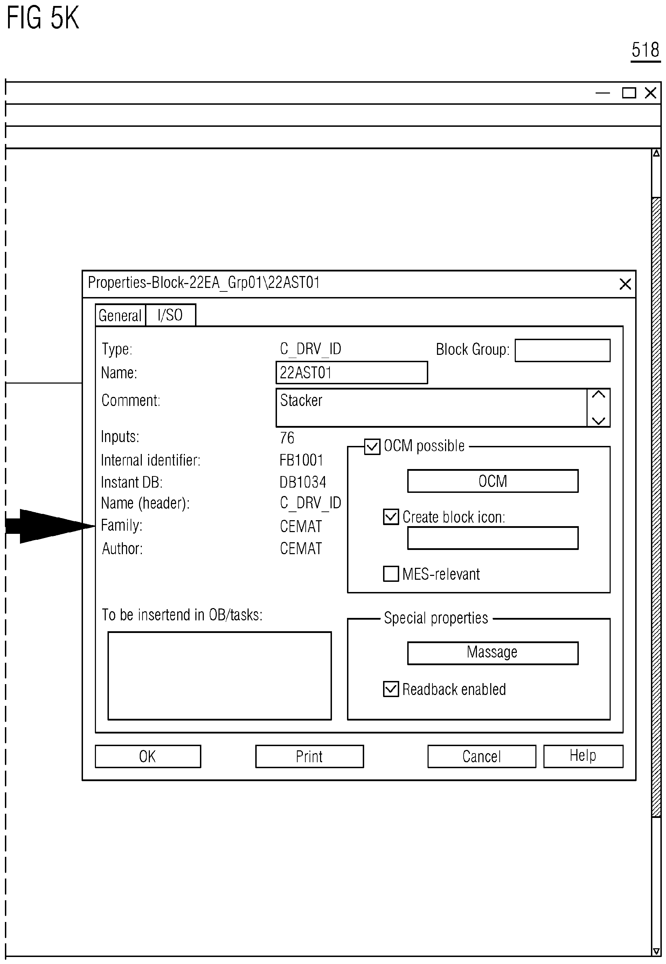

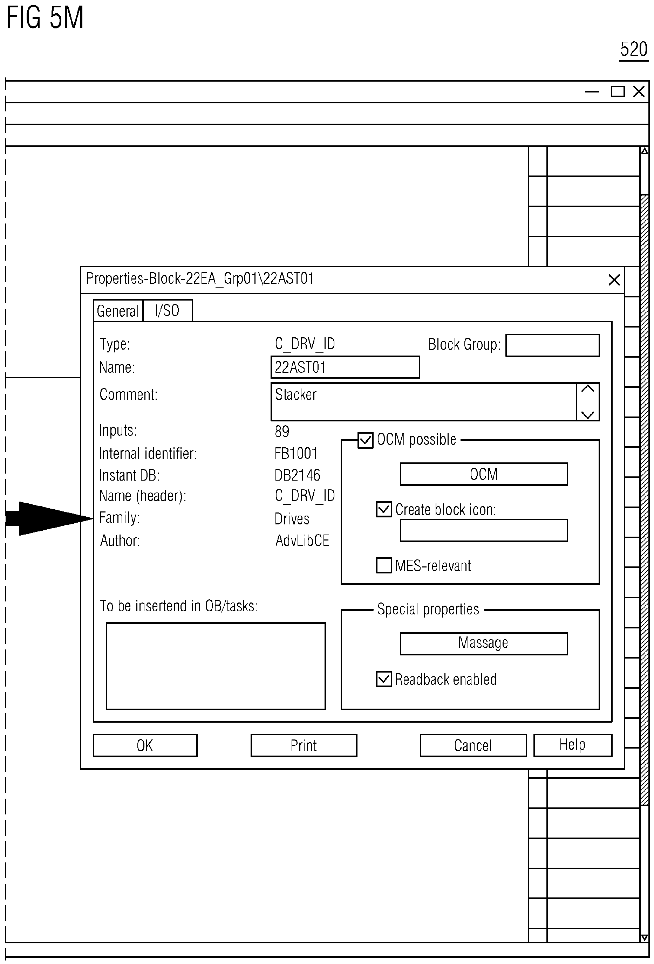

In an embodiment, the at least one intermediate container block is used for managing the process plant upon upgrading the first version to the second version of the distributed control system 104. The details on operation of the system for upgrading the distributed control system 104 from the first version to the second version have been elaborated in subsequent paragraphs at least with reference to **FIGs. 5A** - **5M** and **FIGs. 6A** - **6B****.**

Figures 4A - B illustrate a pictorial depiction 400 of the at least one functional block, according to an embodiment of the present disclosure.

As depicted, 402 represents the at least one functional block of the distribured control system. In an embodiment of the present disclosure, the at least one functional block represent the basic structural elements which are used in logic building of the distributed control system 104. Further, the at least one functional blocks correspond to the program blocks that permanently store their input, output, and in-out parameters in the instance data blocks.

**Figures 4C** - **4D** illustrate a pictorial depiction 404 of the one or more charts, according to an embodiment of the present disclosure.

The pictorial depiction 404 represents the one or more charts of the distributed control system 104. In an embodiment of the present disclosure, each of the one or more charts is a combination of functional blocks representing the physical component along with its periphery signals and logic component that constitutes an intended use. Further, each of the one or more charts includes the set of sub-charts which may denote a section of the process plant or the entire process plant. As depicted, the one or more charts denote a set of field instances. In an embodiment of the present disclosure, an individual chart is prepared to denote an instance in field. For example, the set of field instances may be a motor present in field, an analog, or digital signals.

**Figure 4E** illustrates a pictorial depiction of the program, according to an embodiment of the present disclosure.

As depicted, 406 represents the program of the distributed control system 104. In an embodiment of the present disclosure, the program includes the one or more controllers associated with the distributed control system 104. Further, each of the one or more controllers includes the one or more sources, the at least one functional block, the one or more charts and the one or more symbols, as shown in the figure.

**Figures 5A - 5M** are graphical user interface screens depicting an operation of the system for upgrading the distributed control system 104 from the first version to the second version, according to an exemplary embodiment of the present disclosure. For the sake of brevity, **Figures 5A - 5G** are explained in conjunction with each other.

In an embodiment, functional block pins associated with the first version and functional block pins associated with the second version of the distributed control system 104 may be different. Accordingly, when functional blocks are upgraded from the first version to the second version, the one or more connections associated with the functional blocks are broken. As depicted in graphical user interface screen 500 of Figure 5A, functional block pins of a distributed control system version 7 block 502 may be different from functional block pins of a distributed control system version 9 block 504.

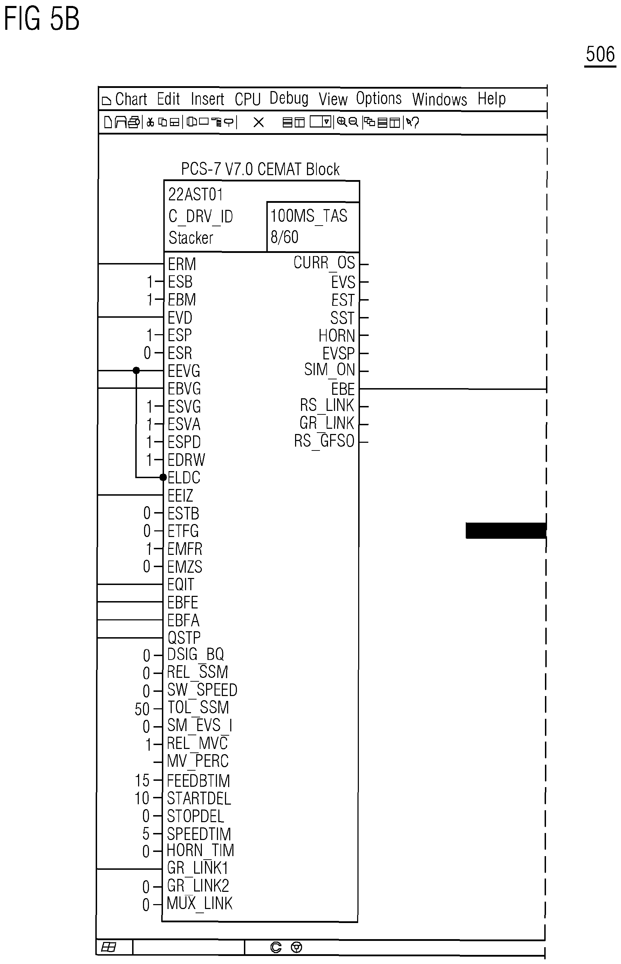

Accordingly, the system 102 considers the distributed control system-based block as an input. Further, the system 102 identifies a functional block to be migrated from among the plurality of functional blocks. As depicted in graphical user interface screen 506 of Figures 5B - 5C, the functional block corresponds to a unidirectional motor block with block type C_Drv_1D. Further, the one or more first functional block pins of the functional block have a German nomenclature. Further, a family and an author of the functional block is CEMAT. In an embodiment of the present disclosure, the functional block is right protected. Thus, the functional block may not be allowed for one or more custom modifications.

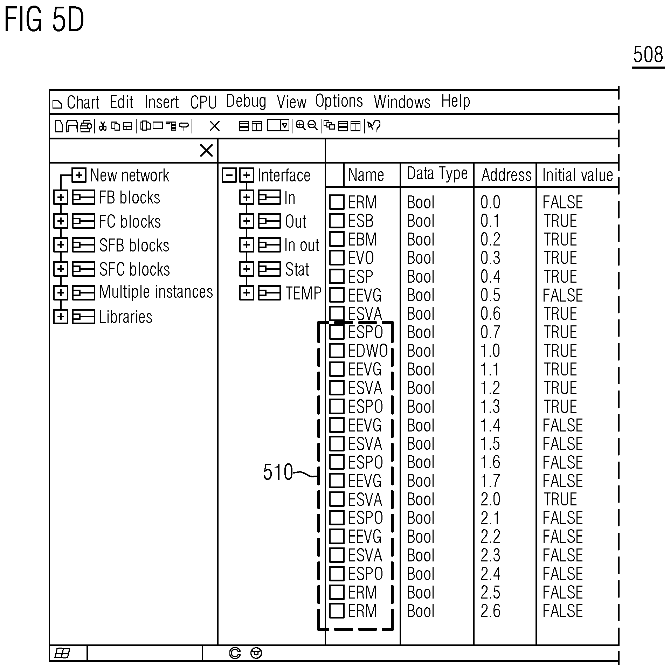

As depicted in graphical user interface screen 508 of Figures 5D - 5E, the at least one intermediate container block is created by cloning the identified at least one functional block, i.e., the one or more CEMAT blocks. Further, the at least one intermediate container block is created for CEMAT blocks having pin names for the at least one functional block and the one or more required code segments. Further, the graphical user interface screen of Figures 5D - 5E depict the at least one intermediate container block with German functional block pin names 510.

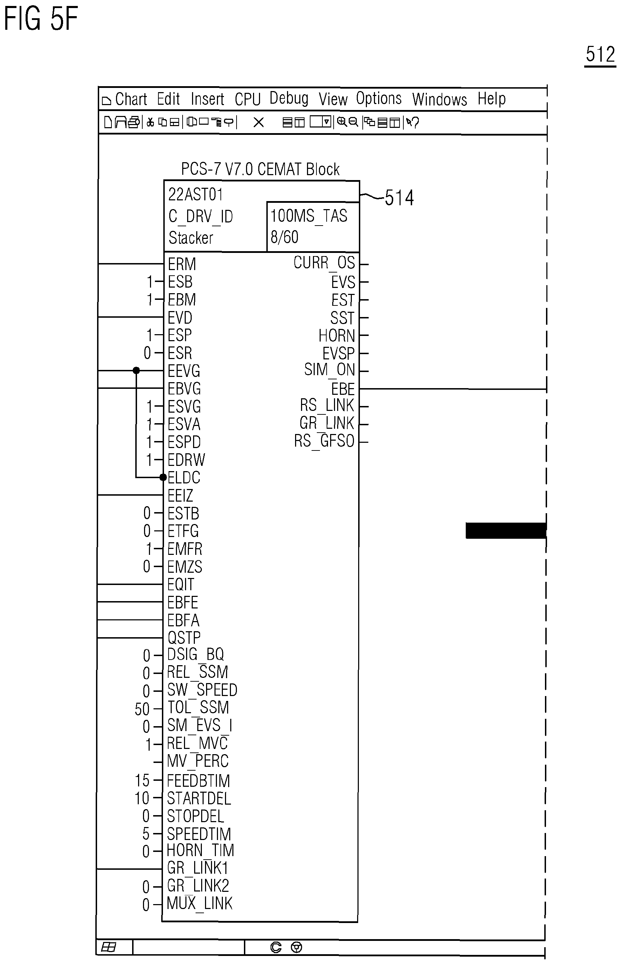

Further, a graphical user interface screen 512 of Figures 5F -5G depicts importing of the one or more connections of the one or more charts to the at least one intermediate container block. The at least one intermediate container block is represented by 514.

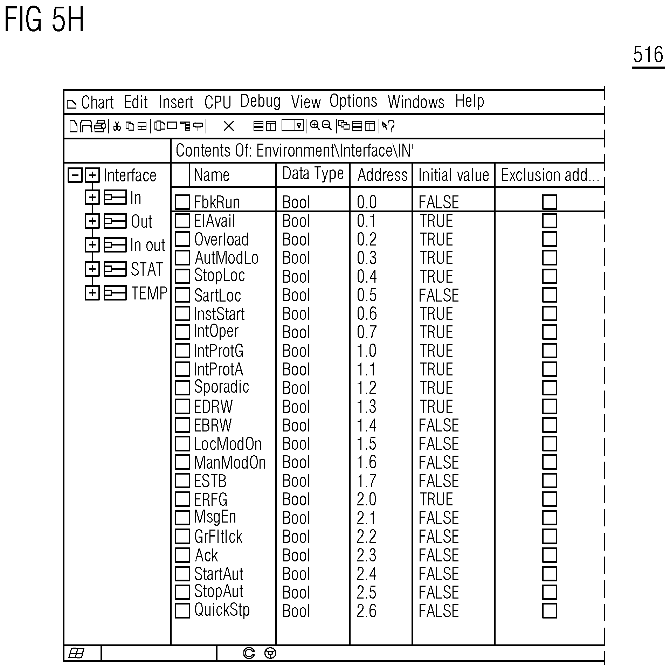

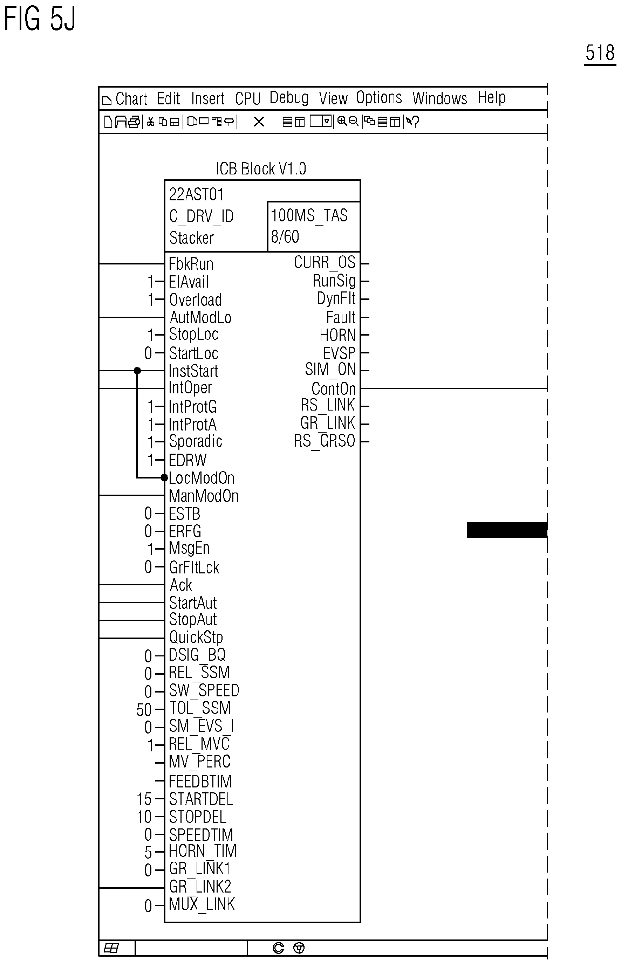

Furthermore, a name of each of the one or more second functional block pins of the at least one intermediate container block is replaced with a name of the one or more new functional block pins associated with the at least one functional block in the second version. As depicted in graphical user interface screen 516 of Figures 5H - 5I, the one or more connections associated with the at least one intermediate container block are maintained after updating the name of each of the one or more second functional block pins. In an embodiment of the present disclosure, the one or more connections are maintained because one or more functional attributes of the at least one intermediate container block is not changed. Further, the graphical user interface screen 516 of Figures 5H - 5I depicts the one or more second functional block pins which are matched with the one or more new functional block pins. Furthermore, the graphical user interface screen 518 of Figures 5J - 5K depicts that the one or more functional attributes of the at least one intermediate container block 506, such as family, author, and the like, remains the same.

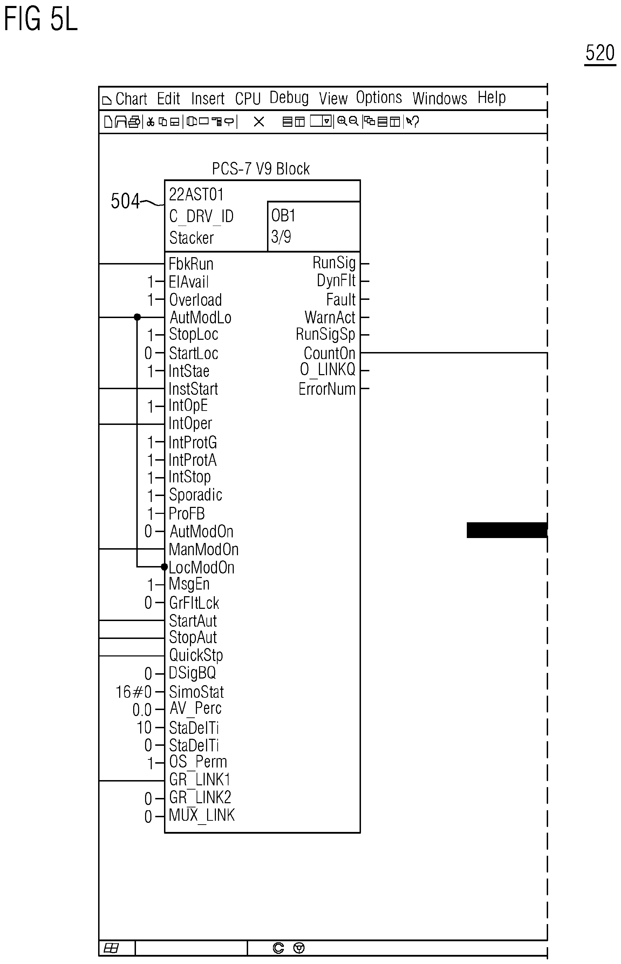

Further, the distributed control system 104 is upgraded from the first version to the second version of the distributed control system 104 by importing the at least one functional block associated with the second version into the at least one intermediate container block. As depicted in graphical user interface screen 520 of Figures 5L - 5M, the one or more connections of the at least one intermediate container block are maintained since the name of each of the one or more second functional block pins is similar to the name of the one or more new functional block pins.

**Figures 6A - 6B** illustrate a process flow comprising a method 600 depicting an operation of the system 102 for upgrading the distributed control system 104 from the first version to the second version, according to an embodiment of the present disclosure. In an embodiment of the present disclosure, the method 600 is performed by the system 102.

At step 602, the distributed control system based project is accessed by the user. Further, at step 604, the system 102 identifies the at least one functional block from among the plurality of functional blocks based on the type of the plurality of functional blocks.

Further, at step 606, the system 102 detects the one or more first functional block pins for which one or more functionalities, the name and the one or more functional attributes are modified by the system 102. Also, the one or more first functional block pins are required to be migrated from the from the first version to the second version. In an embodiment of the present disclosure, the system 102 performs the detection of the one or more first functional block pins one time. Further, the system 102 uses an output of the detection as a reference for one or more projects similar to the distributed control system based project.

Furthermore, at step 608, the system 102 creates the at least one intermediate container block corresponding to each of the identified at least one functional block, such that the one or more first functional block pins associated with the at least one functional block and the one or more second functional block pins associated with the at least one intermediate container block are same. Further, the at least one intermediate container block are imported and updated in a logic of the distributed control system 104.

At step 610, it is determined if the one or more connections present on the at least one functional block is migrated to the at least one intermediate container block. If no, step 608 is performed again. If yes, at step 612, the name of each of the one or more second functional block pins is automatically updated with the name of the one or more new functional block pins associated with the at least one functional block in the second version by using the configuration library. Further, the at least one intermediate container block are imported and updated in the logic of the distributed control system 104 upon automatically updating the name of the one or more new functional block pins.

At step 614, it is determined if the one or more connections present on the at least one functional block is migrated to the at least one intermediate container block. If no, step 610 is performed again. If yes, at step 616, the system 102 imports the at least one functional block associated with the second version into the at least one intermediate container block. In an exemplary embodiment of the present disclosure, the at least one functional block associated with the second version corresponds to the one or more CEMAT blocks of a latest version. Further, the system 102 confirms a connection status from a generated log file. The connection status correspond to connections which are present in the first version of the distribured control system and which are mapped to the at least one functional block associated with he first version of the distributed control system. If the connections are deleted, the connections are received in log files which are generated during the updation of the at least one functional block.

At step 618, the user matches the functionality associated with the distributed control system 104 to a previous version of the distributed control system 104.

**Figure 7** illustrates an exemplary process flow depicting a method 700 for upgrading a distributed control system 104 from a first version to a second version, according to an embodiment of the present disclosure. The method 700 is performed by a system 102, as shown in FIG. 2.

At step 702, at least one functional block is identified from among a plurality of functional blocks associated with the distributed control system 104 during upgradation of the distributed control system 104 from the first version to the second version based on a type of the plurality of functional blocks. In one or more embodiments, the at least one functional block associated with the distributed control system 104 is a password protected block, and wherein a user is restricted to update the at least one functional block. Further, the identified at least one functional block is include one or more first functional block pins and one or more code segments. In one exemplary embodiment, the at least one functional block includes one or more CEMAT blocks.

At step 704, at least one intermediate container block corresponding to each of the identified at least one functional block are created, wherein the at least one intermediate container block comprises the one or more second functional block pins.

At step 706, one or more connections associated with the at least one functional block are imported to the at least one intermediate container block.

At step 708, a configuration of each of the one or more second functional block pins of the at least one intermediate container block are automatically updated with a configuration of one or more new functional block pins associated with the at least one functional block in the second version by using a configuration library upon importing the one or more connections. In one embodiment, the one or more second functional block pins of the at least one intermediate block comprises the one or more connections and the one or more code segments. Further, the one or more connections and the one or more code segments associated with the at least one functional block remain same upon automatically upgrading the first version to the second version of the distributed control system 104.

In one or more embodiments, automatically updating the configuration of each of the one or more second functional block pins of the at least one intermediate container block comprises receiving one or more inputs from the user to update the configuration of each of the one or more second functional block pins of the at least one intermediate container block. Subsequently, the configuration library is generated based on the received one or more inputs, wherein the configuration library includes a mapping of configurations of the one or more second functional block pins with configurations of the one or more new functional block pins. Accordingly, the configuration of each of the one or more second functional block pins of the at least one intermediate container block is automatically updated with the configuration of the one or more new functional block pins associated with the at least one functional block in the second version by using the generated configuration library. Further, the configuration of each of the one or more second functional block pins of the at least one intermediate container block is be updated with the configuration of the one or more new functional block pins associated with the at least one functional block in the second version based on the received one or more inputs.

At step 710, the at least one intermediate container block is imported into a program associated with the distributed control system 104 upon automatically updating the configuration of each of the one or more second functional block pins. The program includes the one or more controllers associated with the distributed control system 104. Each of the one or more controllers includes one or more sources, the at least one functional block, one or more charts and one or more symbols.

At step 712, the first version is upgraded to the second version of the distributed control system 104 by importing the at least one functional block associated with the second version into the at least one intermediate container block upon automatically updating the configuration of each of the one or more second functional block pins.

While the above steps shown in Figures 6A-6B and 7 are described in a particular sequence, the steps may occur in variations to the sequence in accordance with various embodiments of the present disclosure. Further, the details related to various steps of Figs. 6A-6B and 7, which are already covered in the description related to Figs. 1-5 are not discussed again in detail here for the sake of brevity.

The present disclosure provides for various technical advancements based on the key features discussed above. Further, the present disclosure eliminates the need for a third party software for upgrading the distributed control system 104 from the first version to the second version. The present disclosure uses an import and export functionality associated with the functional block of the distributed control system. Thus, the user is required to pay any license fee for using any third party software. Further, the present disclosure also prevents exposure of the one or more code segments associated with the distributed control system 104 to any third part. Since, the present disclosure automatically upgrades the first version to the second version of the distributed control system 104, the time and efforts of the user required to update a version of the distributed control system 104 is substantially reduced, along with reducing manual errors. Also, the present disclosure automatically generates the configuration library based on the one or more inputs from the user, such that the distributed control system 104 can be automatically upgraded based on the generated configuration library without any manual intervention from the user. Upon upgrading the distributed control system 104 from the first version to the second version, the user is able to use enhanced functionalities and features of the second version as compared to the first version.

The plurality of modules 112 are implemented by any suitable hardware and/or set of instructions. Further, the sequential flow illustrated in Figure 3 associated with the plurality of modules 112 is exemplary in nature and the embodiments may include addition/omission of steps as per the requirement. In some embodiments, the one or more operations performed by the plurality of modules 112 are performed by the processor/controller based on the requirement.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A method of upgrading a distributed control system (104) from a first version to a second version, the method comprising:
identifying, by one or more processors (202), at least one functional block, from among a plurality of functional blocks, associated with the distributed control system (104) during upgradation of the distributed control system (104) from the first version to the second version based on a type of the plurality of functional blocks, wherein the identified at least one functional block comprises one or more first functional block pins and one or more code segments;
creating, by the one or more processors (202), at least one intermediate container block corresponding to each of the identified at least one functional block, wherein the at least one intermediate container block comprises the one or more second functional block pins;
importing, by the one or more processors (202), one or more connections associated with the at least one functional block to the at least one intermediate container block;
automatically updating, by the one or more processors (202), a configuration of each of the one or more second functional block pins of the at least one intermediate container block with a configuration of one or more new functional block pins associated with the at least one functional block in the second version by using a configuration library upon importing the one or more connections, wherein the one or more second functional block pins of the at least one intermediate container block comprises the one or more connections and the one or more code segments; and
upgrading, by the one or more processors (202), the first version to the second version of the distributed control system (104) by importing the at least one functional block associated with the second version into the at least one intermediate container block upon automatically updating the configuration of each of the one or more second functional block pins.

2. The method as claimed in claim 1, wherein automatically updating the configuration of each of the one or more second functional block pins of the at least one intermediate container block comprises:
receiving, by the one or more processors (202), one or more inputs from the user to update the configuration of each of the one or more second functional block pins of the at least one intermediate container block;
generating, by the one or more processors (202), the configuration library based on the received one or more inputs, wherein the configuration library includes a mapping of configurations of the one or more second functional block pins with configurations of the one or more new functional block pins; and
automatically updating, by the one or more processors (202), the configuration of each of the one or more second functional block pins of the at least one intermediate container block with the configuration of the one or more new functional block pins associated with the at least one functional block in the second version by using the generated configuration library.

3. The method as claimed in any of claims 1 and 2, further comprising updating, by the one or more processors (202), the configuration of each of the one or more second functional block pins of the at least one intermediate container block with the configuration of the one or more new functional block pins associated with the at least one functional block in the second version based on the received one or more inputs.

4. The method as claimed in any of claims 1, 2, and 3, wherein the at least one functional block associated with the distributed control system (104) is a password protected block, and wherein a user is restricted to update the at least one functional block.

5. The method as claimed in claim 1, wherein the one or more connections and the one or more code segments associated with the at least one functional block remains same upon automatically upgrading the first version to the second version of the distributed control system (104).

6. The method as claimed in claim 1, further comprising:
importing, by the one or more processors (202), the at least one intermediate container block into a program associated with the distributed control system (104) upon automatically updating the configuration of each of the one or more second functional block pins, wherein the program comprises the one or more controllers associated with the distributed control system (104), and wherein each of the one or more controllers comprises one or more sources, the at least one functional block, one or more charts and one or more symbols.

7. The method as claimed in any of claims 1 - 6, wherein the at least one functional block comprises one or more CEMAT block.

8. A system for upgrading a distributed control system (104) from a first version to a second version, the system (102) comprising:
a memory (204); and
one or more processors (202) communicatively coupled to the memory (204), wherein the memory (204) comprises a plurality of modules (112) in the form of programmable instructions executable by the one or more processors (202), and wherein the plurality of modules (112) comprises:
an identifying module (302) configured to identify at least one functional block, from among a plurality of functional blocks, associated with the distributed control system (104) during upgradation of the distributed control system (104) from the first version to the second version based on a type of the plurality of blocks, wherein the identified at least one functional block comprises one or more first functional block pins and one or more code segments;
a creating module (304) configured to create at least one intermediate container block corresponding to each of the identified at least one functional block, wherein the at least one intermediate container block comprises the one or more second functional block pins;
an importing module (306) configured to import one or more connections associated with the at least one functional block to the at least one intermediate container block;
an updating module (308) configured to automatically update a configuration of each of the one or more second functional block pins of the at least one intermediate container block with a configuration of one or more new functional block pins associated with the at least one functional block in the second version by using a configuration library upon importing the one or more connections, wherein the one or more second functional block pins of the at least one intermediate container block comprises the one or more connections and the one or more code segments; and
an upgrading module (310) configured to upgrade the first version to the second version of the distributed control system (104) by importing the at least one functional block associated with the second version into the at least one intermediate container block upon automatically updating the configuration of each of the one or more second functional block pins.

9. The system (102) as claimed in claim 8, wherein to automatically update the configuration of each of the one or more second functional block pins of the at least one intermediate container block, the updating module (308) is configured to:
receive one or more inputs from the user to update the configuration of each of the one or more second functional block pins of the at least one intermediate container block;
generate the configuration library based on the received one or more inputs, wherein the configuration library includes a mapping of configurations of the one or more second functional block pins with configurations of the one or more new functional block pins; and
automatically update the configuration of each of the one or more second functional block pins of the at least one intermediate container block with the configuration of the one or more new functional block pins associated with the at least one functional block in the second version by using the generated configuration library.

10. The system (102) as claimed in any of claims 8 and 9, wherein the updating module (308) is further configured to update the configuration of each of the one or more second functional block pins of the at least one intermediate container block with the configuration of the one or more new functional block pins associated with the at least one functional block in the second version based on the received one or more inputs.

11. The system (102) as claimed in any of claims 8, 9, and 10, wherein the at least one functional block comprises one or more CEMAT block.

12. An industrial environment (100) comprising:
a system (102) as claimed in claims 8-11;
a technical installation comprising one or more physical components (108); and
a plurality of human machine interfaces (110) communicatively coupled to the system (102) via a network (106), wherein the system (102) is configured to perform a method according to any of the claims 1 to 7.

13. A computer-program product, having machine-readable instructions stored therein, that when executed by one or more processors (202), cause the one or more processors (202) to perform a method according to any of the claims 1-7.
